(19) Europäisches Patentamt

European Patent Office

Office européen des brevets

(11) Veröffentlichungsnummer: **0 230 971 B1**

(12) **EUROPÄISCHE PATENTSCHRIFT**

(45) Veröffentlichungstag der Patentschrift: **10.06.92**

(51) Int. Cl.⁵: **C11C 3/12**

(21) Anmeldenummer: **87100754.8**

(22) Anmeldetag: **21.01.87**

(54) **Verfahren zur kontinuierlichen heterogenkatalytischen Hydrierung von Fetten, Fettsäuren und Fettsäurederivaten.**

(30) Priorität: **29.01.86 DE 3602525**

(43) Veröffentlichungstag der Anmeldung:
**05.08.87 Patentblatt 87/32**

(45) Bekanntmachung des Hinweises auf die
Patenterteilung:
**10.06.92 Patentblatt 92/24**

(84) Benannte Vertragsstaaten:
**DE**

(56) Entgegenhaltungen:
**DE-A- 1 925 034**
**US-A- 4 102 778**

**JOURNAL OF THE AMERICAN OIL CHEMISTS'
SOCIETY, Band 55, Nr. 12, Dezember 1978,
Seiten 892-896, Champaign, US; K. ILSE-
MANN et al.: "Continuous hydrogenation of
fats and fatty acids at short contact times"**

**IDEM**

**CHEMICAL ENGINEERING PROGRESS, Band
73, Nr. 11, 1977, Seiten 71-77, New York, US;
W. MEIER et al.: "Performance of a new, high
efficiency packing"**

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Göbel, Gerd, Dr.
Lindenstrasse 10
W-4006 Erkrath(DE)**

**Beschreibung**

Die Erfindung betrifft ein Verfahren zur kontinuierlichen Hydrierung von Fetten, Fettsäuren und Fettsäurederivaten mit Wasserstoff in Gegenwart eines heterogenen Katalysators.

Verfahren zur hydrierenden Härtung von ungesättigten Fetten, Fettsäuren und Fettsäurederivaten sind aus dem Stand der Technik bekannt. Üblicherweise werden die ungesättigten Verbindungen bzw. Gemische bei einem Druck von 0,3 bis 30 bar und Temperaturen von 50 bis 250°C unmittelbar mit Wasserstoff umgesetzt, wobei man heterogene Katalysatoren in Form von auf einen festen, unlöslichen Träger aufgebrachten Edelmetallen bzw. Edelmetallverbindungen verwendet. Bevorzugtes Übergangsmetall ist Nickel.

Limitierender Faktor der Reaktionsgeschwindigkeit zu Anfang der Hydrier-/Härtungsreaktion ist in der Regel der Wasserstofftransport aus der Gasphase über die Phasengrenze an die Oberfläche des heterogenen Katalysators. Bei hohen Hydriertemperaturen kommt auch der Adsorption des Wasserstoffs an den heterogenen Katalysator eine entscheidende Rolle zu. Daher hat es sich im Stand der Technik als sinnvoll herausgestellt, die Reaktion bei einer für jeden Katalysator und das jeweilige Substrat experimentell zu ermittelnden optimalen Reaktionstemperatur durchzuführen.

Der Adsorption des Wasserstoffs an den Katalysator liegt ein Adsorptionsgleichgewicht zugrunde, das durch Druckerhöhung in Richtung auf eine bessere $H_2$-Adsorption verschoben werden kann. Dies bringt eine Steigerung der Reaktionsgeschwindigkeit der Hydrierreaktion mit sich. Die übliche Desaktivierung des Katalysators durch im Reaktionsgemisch anwesende Katalysatorgifte kann zumindest teilweise durch Druckerhöhung kompensiert werden.

Abgesehen von in Autoklaven durchgeführten diskontinuierlichen Hydrierverfahren, in denen der Katalysator im flüssigen Reaktionsgemisch dispergiert vorlag ("Dead-End-Verfahren"), sind aus dem Stand der Technik kontinuierliche Verfahren zur katalytischen Hydrierung von Fetten und ihren Derivaten in Gegenwart heterogener Katalysatoren bekannt, in denen der Katalysator im flüssigen Reaktionsgemisch dispergiert ist, wobei in einem sogenannten "Blasensäulenreaktor" das flüssige Substrat von den Gasblasen durchströmt oder in einem sogenannten "Strahldüsenreaktor" das flüssige Substrat in den Hydrierwasserstoff enthaltenden Gasraum mittels Düsen eingestrahlt wird. In den genannten Verfahren, wie auch im kontinuierlichen Hydrierverfahren unter Verwendung eines Gleichstrom-Festbettreaktors, die alle im großtechnischen Betrieb zum Einsatz kommen, wird gefordert, daß zwischen flüssiger und fester Phase eine möglichst große Phasengrenzfläche geschaffen wird, die eine gleichmäßige Verteilung des Hydriergases zwischen Feststoff- und Flüssigkeitsphase ermöglicht. Aus verfahrenstechnischen Gründen wird weiterhin eine isotherme Temperaturführung gefordert. Zudem sind aus ökonomischen Gründen hohe Raum-Zeit-Ausbeuten angestrebt. Die genannten Kriterien werden aber durch die obigen Verfahren ausnahmslos nur teilweise erfüllt. Dabei können die große Phasengrenzfläche und eine gleichmäßige Verteilung des Reaktionsgases zwischen fester und flüssiger Phase am ehesten durch einen entsprechend konzipierten heterogenen Katalysator sowie durch Einsatz von Begasungsrührern oder ähnlichen Gas-Flüssigkeits-Umwälzungsvorrichtungen realisiert werden. Hingegen ist eine definierte Führung der Reaktionstemperatur bei steigenden Volumina der Reaktionsbehälter mit vergleichsweise geringer für den Wärmeaustausch nutzbarer Fläche nur schwer möglich. Ein vollständiger Umsatz vom ungehärteten Substrat zum gehärteten Produkt ist aufgrund der Rückvermischung im batch-Betrieb nur bei langen Reaktionszeiten möglich, was zu einer schlechten Raum-Zeit-Ausbeute führt. Im kontinuierlichen Hydrierbetrieb sind mit den genannten Verfahren nur niedrige Raum-Zeit-Ausbeuten zu erreichen.

Aus Chemical Abstracts 87, 199 383b ist die Hydrierung nativer Öle in Stahlrohren bei 180 bis 220°C und einem Wasserstoffdruck von 2 bis 50 atm (2 bis 50 bar) in Gegenwart eines Nickelkatalysators bekannt, wobei als Füllkörper des Reaktionsrohres Raschig-Ringe verwendet werden. Dieses Verfahren führt zu für technische Erfordernisse brauchbaren Hydrierergebnissen, wenn Fette und Öle mit hohen Jodzahlen, also einem hohen Grad an Ungesättigtheit, verwendet werden. Schlechtere Ergebnisse, die das Verfahren für den großtechnischen Einsatz unbrauchbar machen, werden bei Fetten bzw. Ölen mit niedriger Jodzahl erzielt. Zudem weist das Verfahren -bedingt durch die Natur der Füllkörper - den für den großtechnischen Einsatz wesentlicheren Nachteil auf, daß aufgrund der unregelmäßigen Anordnung der Raschig-Ringe im Reaktionsrohr ein vergleichsweise großer "holdup" des Substrats im Reaktionsrohr bewirkt wird, der zu einer ungleichmäßigen Verweilzeit des Substrats bzw. des Reaktionsgases im Reaktionsrohr führt. Dies hat zwangsläufig eine Erniedrigung der Raum-Zeit-Ausbeuten zur Folge.

Zudem wird es immer wieder beobachtet, daß der im Substrat dispergierte Katalysator im Inneren der Raschig-Ringe sedimentiert und sich dadurch insbesondere die Ringe, deren Längsachse im rechten Winkel zur Strömung des Substrats bzw. des Reaktionsgases liegt, sukzessive zusetzen. Dadurch steht nicht mehr der gesamte Strömungsquerschnitt des Reaktionsrohres für die Hydrierreaktion zur Verfügung, so daß ebenfalls eine drastische Verminderung der Raum-Zeit-Ausbeuten, verbunden mit einem sukzessiven Zufahren des Katalysatorbetts, resultiert. Das genannte, in C.A. referierte Verfahren eignet sich daher nicht für den großtechnischen Einsatz, im Hinblick auf die Forderung einer hohen Raum-Zeit-Ausbeute.

Als ein weiterer Nachteil von aus dem Stand der Technik bekannten Verfahren ist es anzusehen, daß die in ihnen verwendeten Reaktionsbehälter, meist Reaktionsrohre, Füllungen aus Füllkörpern zur Vegrößerung der Oberfläche oder eingebaute Packungen enthalten, die zwar einen regelmäßigen Strömungsverlauf der durch sie geführten Substrate bzw. Reaktionsgase ermöglichen, andererseits aber eine Verweildauer von Substraten und Gas erzwingen, die zu kurz ist, um hohe Umsätze bzw. hohe Raum-Zeit-Ausbeuten zu ermöglichen.

Aufgabe der Erfindung war es, die genannten Nachteile der Verfahren zur Hydrierung von Fetten und deren Derivaten zu beseitigen und ein kontinuierliches Verfahren zur Fetthärtung zur Verfügung zu stellen, in dem im Rohrreaktor eine gleiche Strömungsgeschwindigkeit über den ganzen Strömungsquerschnitt sichergestellt werden kann. Zudem sollte das erfindungsgemäße Verfahren mit Füllkörpern bzw. Packungen im Rohrreaktor arbeiten, die eine Sedimentation des Katalysators in der Füllkörperpackung aufgrund der Füllkörpergeometrie gar nicht erst ermöglichen und dadurch ein "Zufahren" des Katalysatorbetts von vornherein verhindert wird. Das erfindungsgemäße Verfahren sollte sowohl für die Härtung von Rohfettsäuren als auch von destillierten Fettsäuren geeignet sein und zudem aufgrund der definierten Verweilzeit des Substrats im Reaktor die Möglichkeit schaffen, auch bestimmte, nicht voll durchgehärtete Produkte zu erhalten. Dabei war eine hohe Raum-Zeit-Ausbeute sicherzustellen. Überraschenderweise wurde nun festgestellt, daß in einem Verfahren zur kontinuierlichen Hydrierung von Fetten oder deren Derivaten in einem Reaktionsrohr bei vorgegebenen Strömungsverhältnissen der gasförmigen und der flüssigen Phase die Verfahrensbedingungen, insbesondere die Einstellung der Phasengrenzfläche und der Reaktionstemperatur, optimal gestaltet werden können und - bedingt durch den geometrischen Aufbau der Füllkörper im Reaktor - durch geringe Rückvermischung in der flüssigen Phase hohe Umsätze und hohe Raum-Zeit-Ausbeuten erreicht werden können.

Die Erfindung betrifft ein Verfahren zur kontinuierlichen, heterogenen Hydrierung von Fetten, Fettsäuren und/oder Fettsäurederivaten mit Wasserstoff in Gegenwart eines in flüssiger Phase dispergierten heterogenen Katalysators in einem rohrförmigen, Füllkörper enthaltenden Reaktor, dessen Länge zu seinem Durchmesser in einem Verhältnis ≥ 10 : 1 steht, bei Drücken im Bereich von 0,5 bis 300 bar und Temperaturen im Bereich von 60 bis 260°C durch in-Kontakt-bringen der Reaktionskomponenten, das dadurch gekennzeichnet ist, daß man den Reaktor mit einer geometrisch regelmäßig angeordneten Packung von kugeln eines Durchmessers im Bereich von 1 bis 10 mm aus Glas, keramik oder Metall beschickt, den Wasserstoff im Gleich- oder Gegenstrom zu dem Fettsäuresubstrat führt, die Gasgeschwindigkeit auf einen Bereich von 0,5 bis 30 cm/sec, bezogen auf den Gesamtquerschnitt des Reaktors, einstellt und den in geringen Mengen des jeweiligen Reaktionsproduktes suspendierten, auf einem unlöslichen Träger fixierten Übergangsmetallkatalysator dem Substrat schon vor Eintritt in den Reaktor zudosiert.

Durch das erfindungsgemäße Verfahren können Fette, Fettsäuren und Fettsäurederivate natürlicher oder synthetischer Herkunft kontinuierlich hydriert werden. Bevorzugt werden für die Hydrierung Substrate eingesetzt, die natürlicher Herkunft sind. Als solche kommen beispielsweise Sojaöl, Sonnenblumenöl, Erdnußöl, Kokosöl oder andere Öle bzw. Fette natürlicher Herkunft sowie die daraus durch Spaltung gewonnenen Fettsäuren und/oder Fettsäurederivate, wie beispielsweise Fettsäuren mit 8 bis 22 C-Atomen, in Frage. Im Zuge der Hydrierung werden die in diesen Festtsäuren bzw. Fetten vorhandenen Doppelbindungen in den Alkylresten mehr oder weniger vollständig hydriert und dadurch die Härtung bewirkt.

Als Katalysatoren für das erfindungsgemäße Verfahren zur kontinuierlichen Hydrierung ungesättigter Fette bzw. Fettsäuren können alle für derartige Hydrierreaktionen geeigneten Katalysatoren verwendet werden. Derartige Katalysatoren enthalten in der Regel ein oder mehrere Übergangsmetalle bzw. Verbindungen eines oder mehrerer Übergangsmetalle in einer für die Hydrierung geeigneten Form. Bevorzugt werden für das erfindungsgemäße Verfahren Katalysatoren, die ein oder mehrere Metalle aus der achten Nebengruppe des Periodensystems der Elemente oder eine oder mehrere ihrer Verbindungen enthalten. Besonders bewährt haben sich die Metalle Eisen, Ruthenium, Osmium, Kobalt, Rhodium, Iridium, Nickel, Palladium und Platin sowie Verbindungen dieser Metalle. Aus wirtschaftlichen Gründen sowie wegen seiner besonderen Effizienz wird Nickel bzw. eine oder mehrere seiner Verbindungen als Katalysator für die Hydrierung von Fetten, Fettsäuren und/oder Fettsäurederivaten gemäß der Erfindung verwendet.

Der verwendete Katalysator wird für den Einsatz in der Hydrierung auf einen handelsüblichen unlöslichen Träger aufgetragen. Als Träger können die verschiedensten, für diesen Zweck an sich bekannten, löslichen Substrate verwendet werden. Beispielsweise sind Silikate als Träger besonders gut geeignet. Erfindungsgemäß wird ein Natrium-Aluminium-Silikat-Träger mit Vorteil verwendet, der eine spezifische Oberfläche von ungefähr 80 bis 100 m$^2$/g aufweist. Auf der Oberfläche eines derartigen Trägers wird Nickel, z.B. aus einer Nickel(II)sulfatlösung mit Natriumcarbonat, gefällt und die so gebildete Fällung einer Reduktion mit Wasserstoff unterworfen.

Zum Einsatz in dem erfindungsgemäßen Verfahren zur kontinuierlichen heterogenen Hydrierung von Fetten oder Fettsäuren wird der jeweilige Katalysator in geringen Mengen eines gehärteten Fettes, d.h. in geringen Mengen des jeweiligen Reaktionsproduktes, suspendiert. Diese Katalysatorsuspension wird dann, wie weiter unten beschrieben, dem zu hydrierenden Substrat schon vor Eintritt in den Reaktor zudosiert.

Als Reaktionsbehälter für das erfindungsgemäße Verfahren kommen im Prinzip alle für derartige Hydrierreaktionen unter Druck geeigneten Reaktoren in Frage. Besonders bewährt haben sich rohrförmige Reaktoren, die aus einem unter den Reaktionsbedingungen inerten Material, beispielsweise rostfreiem Stahl (DIN 1.4571 oder U.S. Standard 316 Ti), bestehen. Eine wesentliche Anforderung an die Geometrie des Reaktorinnenraumes ist, daß das Verhältnis der Reaktorlänge zum Reaktordurchmesser größer oder gleich 10 : 1 ist, daß also gewährleistet ist, daß den Reaktionskomponenten eine ausreichende Weglänge zur Verfügung steht, auf der sie miteinander reagieren können. Dies ist bei Reaktoren mit einem L/D-Verhältnis kleiner 10 : 1 nicht gewährleistet.

Erfindungsgemäß wird der Innenraum des Reaktors mit einer geometrisch regelmäßig angeordneten Packung von kugeln eines Durchmessers im Bereich von 1 bis 10 mm aus Glas, keramik oder Metall beschickt. Diese Packung soll zu einer deutlichen Vergrößerung der Grenzfläche zwischen der flüssigen und der gasförmigen Phase beitragen. Mit dem Ziel, möglichst gleichmäßige Produktströme zu erhalten, werden hier Packungen angestrebt, die in ihrer dreidimensionalen Anordnung ein Höchstmaß an Regelmäßigkeit gewährleisten.

Schüttmengen aus kugelförmigen Füllkörpern kommen diesem Ziel am nächsten. Bevorzugt beschickt man den Reaktor mit Kugeln mit einem Durchmesser im Bereich von 3 bis 6 mm.

Die im Reaktor angeordneten Packungen haben die Funktion, die Phasengrenzfläche drastisch zu vergrößern und eine gleichmäßige Verteilung des Hydriergasstromes auf die Oberfläche des zu hydrierenden Substrates zu bewirken.

Das Material derartiger Packungen muß inert gegenüber den beteiligten Reaktionpartnern unter den anwendeten Reaktionsbedingungen sein. Bevorzugt werden kugelförmige Füllkörper aus Glas verwendet.

Die Vergrößerung der Phasengrenzfläche ist naturgemäß von der Oberflächenausdehnung der vorhandenen Packung, bei einer Kugel-Packung vom Durchmesser der verwendeten Kugeln abhängig. So vermögen beispielsweise Kugeln mit einem Durchmesser von ca. 6 mm eine spezifische Phasengrenzfläche von 620 $m^2/m^3$ einzustellen. Bei dichter Füllung des Reaktorinnenraums ergibt sich dabei ein relatives Zwischenkornvolumen, d.h. ein Volumen, das für die Gas- und Flüssigkeitsströmung unmittelbar zur Verfügung steht, von 0,19 (19 %). Für Kugeln mit einem Durchmesser von ca. 3 mm ergibt sich eine spezifische Phasengrenzfläche von 1750 $m^2/m^3$, und das relative Zwischenkornvolumen liegt bei 0,38 (38 %). Die Reaktionsbedingungen des erfindungsgemäßen Verfahrens zur kontinuierlichen heterogenen Hydrierung von Fetten, Fettsäuren und/oder Fettsäurederivaten mit Wasserstoff liegt im wesentlichen in dem Bereich, der für derartige Reaktionen an sich aus dem Stand der Technik bekannt ist. Dabei können sich die Wasserstoffdrücke im Bereich von 0,5 bis 300 bar und die Reaktionstemperaturen im Bereich von 60 bis 260 ° C bewegen.

Erfindungsgemäß ist es möglich, das Hydriergas (Wasserstoff) im Gleichstrom oder im Gegenstrom zu dem Fettsäuresubstrat zu führen. Die bedeutet, daß entweder der Wasserstoff zusammen mit zu hydrierendem Substrat am Kopf des Reaktors aufgegeben wird und mit diesem durch den Reaktorinnenraum über die Füllkörper strömt. Im kontinuierlichen Reaktorbetrieb läßt sich dabei ein sogenannter "Plug-Flow" erzielen, der dazu führt, daß alle Substratmoleküle im wesentlichen eine gleiche Verweilzeit im Reaktor haben. Dies führt zu hohen Umsätzen und damit auch zu den erstrebten hohen Raum-Zeit-Ausbeuten. Es ist jedoch auch möglich, das Hydriergas (Wasserstoff) im Gegenstrom zum ungesättigten Substrat zu führen, so daß der Wasserstoff dem vom Kopf des Reaktors herabströmenden Substrat entgegenströmt. Diese Verfahrensweise ist jedoch nur dann vorteilhaft anwendbar, wenn der Wasserstoffstrom nicht zu einem Stau des herabrieselnden Substrats im Reaktor führt. Dies würde zu einer Rückvermischung mit den oben beschriebenen, im Hinblick auf die Raum-Zeit-Ausbeuten negativen Konsequenzen führen. In dem erfindungsgemäßen Verfahren wird der Gleichstrom von Wasserstoff und Fettsäuresubstrat bevorzugt.

Die Geschwindigkeit des Hydriergases wird erfindungsgemäß auf einen Bereich von 0,5 bis 30 cm/sec, bevorzugt auf einen Bereich von 5 bis 20 cm/sec eingestellt und ist dabei bezogen auf den Gesamtquerschnitt des Reaktors. Natürlich ergibt sich dabei, daß die im Reaktor gemessenen, auf die Verhältnisse im Zwischenkornbereich bezogenen Gasgeschwindigkeiten deutlich höher sind, da hierbei - in Abhängigkeit von Druck, Temperatur und Schüttung der Glaskugel-Packung - dem freien Gasfluß die Füllkörper als Hindernis entgegengesetzt werden. Beispielsweise lassen sich bei Verfahrensdrücken im Bereich von 50 bis 250 bar die Gasdurchsätze im Bereich von 1 bis 6 $Nm^3/h$ variieren.

4

Unter diesen Bedingungen können die Gasgeschwindigkeiten im Zwischenkorn Werte zwischen 1,5 und 150 cm/sec erreichen.

Die Einstellung der Gasgeschwindigkeit unterliegt der bestimmenden Forderung, daß sie oberhalb des Mindestwertes liegen muß, bei dem eine vollständige Hydrierung des einen bestimmten Reaktorquerschnitt durchströmenden Substrats noch möglich ist. Da die bei der Hydrierreaktion freiwerdende Reaktionswärme jedoch auch über das Substrat und das überschüssige Reaktionsgas abgeführt wird, liegt die Gasgeschwindigkeit mit Vorteil oberhalb dieses Mindestwertes. In diesem Falle wird das abströmende Reaktionsgas, das nicht für die Hydrierung des Substrats verbraucht wurde, über entsprechende, unter näher beschriebene Anlagenteile zum Reaktoreintritt zurückgeführt, wobei der chemische $H_2$-Verbrauch durch Zusatz von frischem Wasserstoff ausgeglichen wird. Auf diese Weise wird eine ökonomische Verwendung des gasförmigen Reaktionspartners sichergestellt.

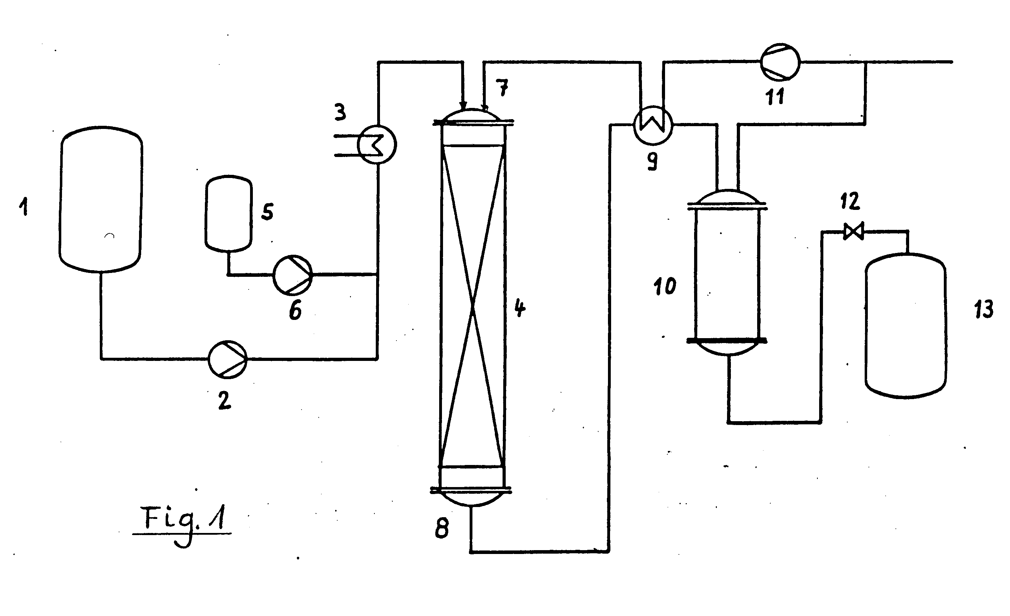

Der detaillierte Verfahrensablauf wird anhand des in Fig. 1 gezeigten Fließschemas näher erläutert. Der flüssige Rohstoff - Öl, Fettsäure oder Fettsäurederivat - wird aus dem Behälter (1) mit der Dosierpumpe (2) über den Wärmetauscher (3) in den rohrförmigen Reaktor (4) gepumpt. Aus dem Rührbehälter (5) wird gleichzeitig mit der Pumpe (6) ebenfalls über den Wärmetauscher (3) die Suspension des auf einen unlöslichen Träger aufgebrachten Katalysators in gehärtetem Fett zudosiert. Am Reaktoreingang wird bei (7) im Gleichstrom mit der flüssigen Phase vorgeheizter Wasserstoff zugeführt. Flüssige und gasförmige Phase durchlaufen den Reaktor (4) im Gleichstrom, wobei der für eine vollständige Hydrierung erforderliche Druck im Bereich von 0,5 bis 300 bar aufrechterhalten wird. Die Temperierung des Reaktors (4) auf die erforderliche Reaktionstemperatur im Bereich von 60 bis 260°C erfolgt indirekt mit einem Wärmeträger über den Reaktormantel. Am Reaktorausgang (8) durchläuft der Produktstrom den Wärmeaustauscher (9) zur indirekten Vorheizung des im Kreislauf geführten Reaktionsgases und gelangt dann in den Gas-Flüssig-Abscheider (10). Von dort wird der Wasserstoff über den Kreisgaskompressor (11) und den Wärmeaustauscher (9) zum Reaktoreingang (7) zurückgeführt. Dabei wird der chemische $H_2$-Verbrauch durch Zusatz von frischem Wasserstoff ausgeglichen. Das flüssige, gehärtete Reaktionsprodukt -Fett, Fettsäure oder Fettsäurederivat - gelangt über das Entspannungsventil (12) in den Entspannungsbehälter (13). Von dort kann es zur Weiterführung, zum Transport oder zur Lagerung entnommen werden.

Das erfindungsgemäße Verfahren zur kontinuierlichen katalytischen Hydrierung von Fetten, Fettsäuren und Fettsäurederivaten zeigt gegenüber den aus dem Stand der Technik bekannten Verfahren den wesentlichen Vorteil, daß durch optimale Einstellung der Reaktionsbedingungen - Hydriertemperatur, $H_2$-Partialdruck und Durchsatz an Hydriergas - die Raum-Zeit-Ausbeute der Hydrierreaktion deutlich erhöht werden kann. Dies wird ebenfalls dadurch erreicht, daß die spezifische Phasengrenzfläche der gasförmigen und flüssigen Phase durch Verwendung kugelförmiger Füllkörper im Rohrreaktor drastisch erhöht wurde und dadurch eine gleichmäßigere Verteilung des Hydriergases zwischen den beiden Phasen erreicht werden kann. Zudem ist wegen der Abfuhr der Reaktionswärme über die beteiligten Reaktionspartner und über eine definierte Verweilzeit des Substrats im Reaktionsraum eine wesentlich bessere Steuerung der Reaktion möglich. Im Gegensatz zu aus dem Stand der Technik bekannten Verfahren wird damit auch erreicht, daß Reaktionsprodukte eines bestimmten Härtungsgrades, der nicht der vollständigen Härtung entspricht, erhalten werden können. Für bestimmte technische Zwecke sind derartige Gemische aus vollständig und teilweise hydrierten Fetten bzw. Fettsäuren sehr erwünscht. Derartige Produkte konnten nach dem Stand der Technik nicht oder nur unter nicht zu vertretendem Verfahrensaufwand erhalten werden.

Die Erfindung wird durch die nachstehenden Beispiele näher erläutert.

Der für die nachfolgend beschriebenen Hydrierversuche verwendete Reaktor war ein für derartige Zwecke üblicher Standardreaktor aus Stahl mit einer Länge von 1200 mm und einem Innendurchmesser von 42 mm (L/D = 28,6 : 1).

Die Füllkörperpackung bestand alternativ aus Glaskugeln von ca. 3 mm Durchmesser (spezifische Phasengrenzfläche: 1750 $m^2/m^3$, relatives Zwischenkornvolumen E = 0,38) oder von ungefähr 6 mm Durchmesser (spezifische Phasengrenzfläche: 620 $m^2/m^3$, E = 0,19).

Als Katalysator wurde ein handelsüblicher Nickel-Katalysator auf einem Natrium-Aluminium-Silikat-Träger (Pricat[R] 99/12; Hersteller: Ruhrchemie AG, Oberhausen) mit einem Nickelgehalt von 22 Gew.-% verwendet, der dadurch hergestellt worden war, daß Nickel(II)sulfat mit Natriumcarbonat auf einem Natrium-Aluminium-Silicat-Träger (spezifische Oberfläche: ca. 80 bis 100 $m^2/g$) gefällt und die Fällung anschließend reduziert worden war. Der Katalysator wurde in gehärtetem Fett (60 %) suspendiert.

Zur Beurteilung der Versuchsergebnisse wurden die Säurezahl (SZ), Verseifungszahl (VZ), Jodzahl (JZ) und der Prozentgehalt an Unverseifbarem (UV) analytisch bestimmt und die folgenden Parameter berechnet:

Umsatz:

$$U = \frac{JZ_0 - JZ}{JZ_0} \times 100 \ (\%)$$

$JZ_0$ = Jodzahl der ungehärteten Rohfettsäure.
  Raumgeschwindigkeit:

$$LHSV = \frac{V_{FS}}{V_R}$$

LHSV = Liquid Hourly Space Velocity;
$V_{FS}$ = Fettsäureeinsatz in $cm^3/h$ und
$V_R$ = Rieselbettvolumen in $cm^3$.
  Raum-Zeit-Ausbeute:

$$RZA = \frac{LHSV \cdot U}{100} \ (l/h)$$

Beispiel 1

Als Ausgangsmaterial diente eine Spaltfettsäure, die nach GC-Analyse folgende Zusammensetzung hatte (Kettenlänge und Gewichtsprozent):
Gesättigt: $C_{10}$ 0,2; $C_{12}$ 0,1; $C_{14}$ 2,3; $C_{15}$ 0,6; $C_{16}$ 22,7; $C_{17}$ 2,3; $C_{18}$ 19,0; $C_{20}$ 0,7; einfach ungesättigt: $C_{14}$ 0,7; $C_{16}$ 3,4; $C_{18}$ 40,8; $C_{20}$ 0,9; zweifach ungesättigt: $C_{18}$ 5,8; dreifach ungesättigt: $C_{18}$ 0,5. Die Spaltfettsäure hatte die Kennzahlen: SZ 196; VZ 202; JZ 58; UV ca. 1 Gew.-%.
Das Ausgangsmaterial wurde in dem oben beschriebenen Reaktor (Volumen 1500 ml), der mit Glaskugeln mit ca. 6 mm Durchmesser gefüllt war, in Gegenwart des oben beschriebenen Nickelkatalysators kontinuierlich bei einem Druck von 250 bar, einer Reaktortemperatur von 220°C und einer Wasserstoffmenge von 4,0 $Nm^3/h$ hydriert. Die Katalysatorkonzentration betrug 0,25 %. Bei unterschiedlichen Mengen an ungesättigter Fettsäure wurden Produkte mit unterschiedlichen Kennzahlen, berechnet nach den oben angegebenen Gleichungen, erhalten. Die Ergebnisse sind der nachfolgenden Tabelle 1 zu entnehmen.

EP 0 230 971 B1

Tabelle 1

| Einsatz $V_{FS}$ ml/h | Produkt-Kennzahlen VZ | UV | JZ | Umsatz % | LHSV $h^{-1}$ | RZA $h^{-1}$ |
|---|---|---|---|---|---|---|
| 400 | 199 | | 1,3 | 97,7 | 0,267 | 0,261 |
| 500 | 200 | | 1,3 | 97,7 | 0,333 | 0,326 |
| 600 | 199 | 2,6 | 1,4 | 97,6 | 0,400 | 0,390 |
| 700 | 199 | 1,9 | 1,3 | 97,7 | 0,467 | 0,456 |
| 800 | 201 | | 1,2 | 97,9 | 0,533 | 0,522 |
| 900 | 201 | | 1,3 | 97,7 | 0,600 | 0,586 |
| 1000 | 200 | | 1,8 | 96,9 | 0,667 | 0,646 |
| 1100 | 200 | | 6,2 | 89,2 | 0,733 | 0,654 |

Vergleichsbeispiel 1

Als Ausgangsmaterial diente die in Beispiel 1 beschriebene Spaltfettsäure. 750 kg des Ausgangsmaterials wurden in einem Rührautoklaven bei 215°C und einem Wasserstoffdruck von 30 bar, in Gegenwart von 2 kg suspendiertem Nickelkatalysator, wie oben beschrieben, (0,27 Gew.-% bezogen auf Ausgangsmaterial) 2 h lang hydriert. Dabei betrug das Reaktionsvolumen 1,2 m³.

Das auf diese Weise erhaltene gehärtete Fettsäuregemisch besaß eine Restjodzahl von 1,0. Der Umsatz betrug 98 %. Die Raum-Zeit-Ausbeute (RZA) war demnach 0,36 $h^{-1}$.

Beispiel 2

Unter identischen Bedingungen wie in Beispiel 1 wurde Spaltfettsäure der in Beispiel 1 beschriebenen Zusammensetzung hydriert, wobei die Katalysatorkonzentration auf 0,5 % verdoppelt wurde. Die Ergebnisse sind der nachfolgenden Tabelle 2 zu entnehmen.

7

## Tabelle 2

| Einsatz $V_{FS}$ ml/h | Produkt-Kennzahlen | | | Umsatz % | LHSV $h^{-1}$ | RZA $h^{-1}$ |
|---|---|---|---|---|---|---|
| | VZ | UV | JZ | | | |
| 1100 | 202 | | 1,6 | 97,2 | 0,733 | 0,713 |
| 1200 | 202 | | 2,2 | 96,2 | 0,800 | 0,769 |
| 1300 | 201 | | 1,7 | 97,1 | 0,867 | 0,841 |
| 1400 | 200 | | 2,3 | 96,0 | 0,933 | 0,896 |
| 1500 | 202 | | 2,2 | 96,2 | 1,000 | 0,962 |
| 1600 | | | 2,7 | 95,3 | 1,067 | 1,027 |
| 1700 | | | 2,9 | 94,9 | 1,133 | 1,076 |
| 1800 | | | 3,0 | 94,8 | 1,200 | 1,138 |
| 1900 | | | 3,0 | 94,8 | 1,266 | 1,201 |

Ergebnis:

Durch Verdopplung der Einsatzmenge an Katalysator gegenüber Beispiel 1 konnte unter ansonsten gleichen Bedingungen die Raum-Zeit-Ausbeute verdoppelt werden. Ein Vergleich der Ergebnisse von Beispiel 1 und Beispiel 2 zeigt, daß die Raum-Zeit-Ausbeute direkt proportional zur Einsatzmenge an Katalysator ist.

Beispiel 3

In zu Beispiel 1 analoger Weise wurde Spaltfettsäure der in Beispiel 1 genannten Zusammensetzung unter variablen Bedingungen in einem Reaktorrohr von 1400 ml Volumen hydriert, wobei die spezifische Oberfläche durch Verwendung von Glaskugeln mit einem Durchmesser von ca. 3 mm gegenüber den Beispielen 1 und 2 deutlich erhöht war. Die Katalysatorkonzentration betrug in allen Fällen 0,5 %; die Reaktionstemperatur lag bei 260 °C; der Einsatz an Fettsäure ($V_{FS}$) betrug 1900 ml/h.

In den Ansätzen A, B und C wurde mit einer gleichbleibenden Wasserstoffzufuhr von 1 $Nm^3$/h hydriert. Der Druck betrug in Ansatz A 50 bar, in Ansatz B 100 bar und in Ansatz C 250 bar.

In den Ansätzen D, E und F wurde bei einem gleichbleibenden Druck von 250 bar hydriert. Die Wasserstoffzufuhr betrug in Ansatz D 1 $Nm^3$/h, in Ansatz E 2 $Nm^3$/h und in Ansatz F 4 $Nm^3$/h.

Die Ergebnisse sind der nachfolgenden Tabelle 3 zu entnehmen.

## Tabelle 3

| Ansatz | JZ | Umsatz % | LHSV $h^{-1}$ | RZA $h^{-1}$ |
|--------|-----|----------|---------------|---------------|
| A | 2,2 | 96,2 | 1,357 | 1,305 |
| B | 1,2 | 97,9 | " | 1,329 |
| C | 1,3 | 97,7 | " | 1,327 |
| D | 1,3 | 97,7 | 1,357 | 1,327 |
| E | 0,8 | 98,6 | " | 1,338 |
| F | 1,1 | 98,1 | " | 1,331 |

Ergebnis:

Gegenüber den in den Beispielen 1 und 2 beschriebenen Ergebnissen konnte eine weitere Verbesserung des Stoffübergangs durch Vergrößern der Phasengrenzfläche unter Verwendung kleinerer Füllkörper erreicht werden. Dadurch erhöhte sich die Raum-Zeit-Ausbeute (bei geringfügig höherer Reaktionstemperatur) gegenüber den in den Beispielen 1 und 2 erzielten Ergebnissen.

Beispiel 4

Als Ausgangsmaterial diente ein Fettsäuregemisch tierischen Ursprungs, das nach GC-Analyse folgende Zusammensetzung hatte (Kettenlänge und Gewichtsprozent):
Gesättigt: $C_{14}$ 3; $C_{15}$ 1; $C_{16}$ 26; $C_{17}$ 2; $C_{18}$ 17; $C_{20}$ 1; einfach ungesättigt: $C_{16}$ 2; $C_{18}$ 44; zweifach ungesättigt: $C_{18}$ 3; dreifach ungesättigt: $C_{18}$ 1. Das Fettsäuregemisch hatte die folgenden Kennzahlen: SZ 205; VZ 206; JZ 55; UV ca. 1 %.
Das Fettsäuregemisch wurde analog der in den Beispielen 1 bis 3 beschriebenen Verfahrensweise bei 220°C und 50 bar hydriert. Der beschriebene Reaktor war dabei mit einer Schüttung von 1400 ml Glaskugeln (Durchmesser 3 mm) beschickt.
Das auf diese Weise erhaltene gehärtete Fettsäuregemisch besaß eine Restjodzahl von 0,5. Der Umsatz betrug 99,1 %. Die Raumgeschwindigkeit (LHSV) betrug 1,43 $h^{-1}$, die Raum-Zeit-Ausbeute (RZA) 1,41 $h^{-1}$.

## Patentansprüche

1. Verfahren zur kontinuierlichen heterogenen Hydrierung von Fetten, Fettsäuren und/oder Fettsäurederivaten mit Wasserstoff in Gegenwart eines in flüssiger Phase dispergierten heterogenen Katalysators in einem rohrförmigen, Füllkörper enthaltenden Reaktor, dessen Länge zu seinem Durchmesser in einem Verhältnis $\geq$ 10 : 1 steht, bei Drücken im Bereich von 0,5 bis 300 bar und Temperaturen im Bereich von 60 bis 260°C durch in-Kontakt-bringen der Reaktionskomponenten, **dadurch gekennzeichnet,** daß man
   a) den Reaktor mit einer geometrisch regelmäßig angeordneten Packung von Kugeln eines Durchmessers im Bereich von 1 bis 10 mm aus Glas, Keramik oder Metall beschickt,
   b) den Wasserstoff im Gleich oder Gegenstrom zu dem Fettsäuresubstrat führt,
   c) die Gasgeschwindigkeit auf einen Bereich von 0,5 bis 30 cm/sec - bezogen auf den Gesamtquerschnitt des Reaktors - einstellt und
   d) den in geringen Mengen des jeweiligen Reaktionsproduktes suspendierten, auf einem unlöslichen Träger fixierten Übergangsmetallkatalysator dem Substrat schon vor Eintritt in den Reaktor zudosiert.

**2.** Verfahren nach Anspruch 1, **dadurch gekennzeichnet,** daß man den Reaktor mit Kugeln eines Durchmessers im Bereich von 3 bis 6 mm beschickt.

**3.** Verfahren nach den Ansprüchen 1 und 2**, dadurch gekennzeichnet,** daß man die Gasgeschwindigkeit auf einen Bereich von 5 bis 20 cm/sec - bezogen auf den Gesamtquerschnitt des Reaktors - einstellt.

**4.** Verfahren nach den Ansprüchen 1 bis 3, **dadurch gekennzeichnet,** daß man einen ein Übergangsmetall aus der Gruppe Eisen, Ruthenium, Osmium, Kobalt, Rhodium, Iridium, Nickel, Palladium und Platin enthaltenden Katalysator verwendet.

**5.** Verfahren nach den Ansprüchen 1 bis 4, **dadurch gekennzeichnet,** daß man einen Nickel enthaltenden Katalysator auf einem Natrium-Aluminium-Silikat-Träger verwendet, der eine spezifische Oberfläche von ungefähr 80 bis 100 $m^2/g$ aufweist.

**6.** Verfahren nach den Ansprüchen 1 bis 5, **dadurch gekennzeichnet,** daß man dem Reaktionsmedium schon vor Eintritt in den Reaktor einen Katalysator zudosiert, der in gehärtetem Fett suspendiert ist.

**Claims**

**1.** A process for the continuous heterogeneous hydrogenation of fats, fatty acids and/or fatty acid derivatives with hydrogen in the presence of a heterogeneous catalyst dispersed in a liquid phase in a tubular packed reactor, of which the length-to-diameter ratio is ≥ 10 : 1, under pressures of 0.5 to 300 bar and at temperatures of 60 to 260°C by bringing the reaction components into contact with one another, characterized in that

a) the reactor is filled with a geometrically regularly arranged packing spheres 1 to 10 mm in diameter of glass, ceramics or metal,

b) the hydrogen is passed through the reactor in cocurrent with or countercurrent to the fatty acid substrate,

c) the gas velocity is adjusted to a value of 0.5 to 30 cm./sec., based on the overall cross-section of the reactor, and

d) the transition-metal catalyst fixed to an insoluble support and suspended in small quantities of the particular reaction product is added to the substrate before it enters the reactor.

**2.** A process as claimed in claim 1, characterized in that the reactor is filled with spheres 3 to 6 mm in diameter.

**3.** A process as claimed in claims 1 and 2, characterized in that the gas velocity is adjusted to a value of 5 to 20 cm./sec., based on the overall cross-section of the reactor.

**4.** A process as claimed in claims 1 to 3, characterized in that a catalyst containing a transition metal from the group consisting of iron, ruthenium, osmium, cobalt, rhodium, iridium, nickel, palladium and platinum is used.

**5.** A process as claimed in claims 1 to 4, characterized in that a nickel-containing catalyst on a sodium-aluminium silicate support having a specific surface of approximately 80 to 100 $m^2/g$ is used.

**6.** A process as claimed in claims 1 to 5, characterized in that a catalyst suspended in hydrogenated fat is added to the reaction medium before it enters the reactor.

**Revendications**

**1.** Procédé d'hydrogénation hétérogène continue de graisses, d'acides gras et/ou de dérivés d'acides gras avec de l'hydrogène, en présence d'un catalyseur hétérogène dispersé en phase liquide, dans un réacteur tubulaire contenant des corps de remplissage, dont la longueur et le diamètre sont entre eux dans un rapport de ≥ 10 à 1, à des pressions comprises dans l'intervalle de 0,5 à 300 bar et à des températures allant de 60 à 260 °C, par mise en contact des composants réactionnels, caractérisé en ce que l'on

a) charge le réacteur avec une garniture disposée régulièrement de manière géométrique de billes de verre, céramique ou métal, dont le diamètre se situe dans l'intervalle de 1 à 10 mm.

b) amène l'hydrogène dans le même sens ou à contre-courant par rapport au substrat d'acide gras,

c) règle la vitesse du gaz dans une plage comprise entre 0,5 et 30 cm/sec, par rapport à la section d'ensemble du réacteur, et en ce l'on

d) ajoute progressivement au substrat, dès avant l'entrée dans le réacteur, le catalyseur de métal transitoire, qui se trouve en suspension dans de faibles quantités du produit de réaction, fixé sur un vecteur insoluble.

2. Procédé selon la revendication 1, caractérisé en ce que l'on charge le réacteur avec des billes dont le diamètre est compris dans l'intervalle de 3 à 6 mm.

3. Procédé selon les revendications 1 et 2, caractérisé en ce l'on règle la vitesse du gaz dans une plage comprise entre 5 et 20 cm/sec par rapport à la section d'ensemble du réacteur.

4. Procédé selon les revendications 1 à 3, caractérisé en ce que l'on utilise un catalyseur renfermant un métal de transition faisant partie du groupe du fer, du ruthénium, de l'osmium, du cobalt, du rhodium, de l'iridium, du nickel, du palladium et du platine.

5. Procédé selon les revendications 1 à 4, caractérisé en ce que l'on utilise un catalyseur renfermant du nickel sur un substrat en silicate de sodium-aluminium, qui présente une surface spécifique d'environ 80 à 100 $m^2$/ g.

6. Procédé selon les revendications 1 à 5, caractérisé en ce que l'on ajoute progressivement au milieu réactionnel, dès avant l'entrée dans le réacteur, a catalyseur, qui se trouve en suspension dans de la graisse durcie.

Fig.1

EP 0 230 971 B1